(19) Europäisches Patentamt / European Patent Office / Office européen des brevets

(11) **EP 4 398 364 A1**

(12) **EUROPEAN PATENT APPLICATION**
published in accordance with Art. 153(4) EPC


(43) Date of publication:
**10.07.2024 Bulletin 2024/28**

(21) Application number: **22864383.9**

(22) Date of filing: **25.08.2022**

(51) International Patent Classification (IPC):
***H01M 10/0567*** *(2010.01)* ***H01M 4/505*** *(2010.01)*
***H01M 4/525*** *(2010.01)* ***H01M 10/052*** *(2010.01)*

(52) Cooperative Patent Classification (CPC):
**H01M 4/505; H01M 4/525; H01M 10/052; H01M 10/0567;** Y02E 60/10

(86) International application number:
**PCT/JP2022/031988**

(87) International publication number:
**WO 2023/032799 (09.03.2023 Gazette 2023/10)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **30.08.2021 JP 2021140433**



(71) Applicant: **Panasonic Intellectual Property Management Co., Ltd.**
**Osaka-shi, Osaka 571-0057 (JP)**

(72) Inventors:
- **AKUTSU, Makoto**
  **Kadoma-shi, Osaka 571-0057 (JP)**
- **KUME, Toshiro**
  **Kadoma-shi, Osaka 571-0057 (JP)**
- **SATO, Takao**
  **Kadoma-shi, Osaka 571-0057 (JP)**

(74) Representative: **Novagraaf International SA**
**Chemin de l'Echo 3**
**1213 Onex, Geneva (CH)**


(54) **NONAQUEOUS ELECTROLYTE BATTERY AND NONAQUEOUS ELECTROLYTE USED IN SAME**


(57) A nonaqueous electrolyte for a nonaqueous electrolyte battery including: a nonaqueous solvent, an electrolytic salt, and a thiophene compound having at least one electron-withdrawing group R including oxygen or nitrogen, wherein a content of the thiophene compound is 0.01 mass% or more and 10 mass% or less.


*FIG. 1*

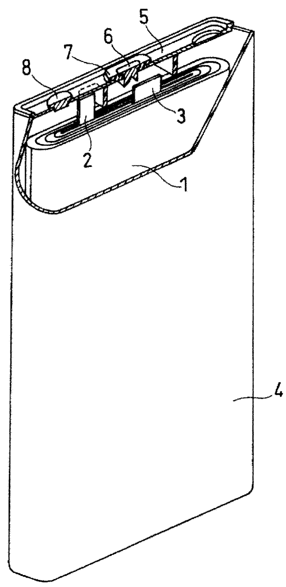


EP 4 398 364 A1

## Description

[Technical Field]

The present disclosure relates mainly to a nonaqueous electrolyte for nonaqueous electrolyte batteries.

[Background Art]

Nonaqueous electrolyte batteries represented by lithium ion secondary batteries include a positive electrode, a negative electrode, and a nonaqueous electrolyte. When metal contaminants such as copper, iron, and the like are present in nonaqueous electrolyte batteries in which electrochemical redox reactions are used, dissolution and deposition reactions of the metal contaminants occur, and the voltage of the nonaqueous electrolyte battery may decrease.

Patent Literature 1 proposes a method in which a compound including one or more thiol groups in the molecule is included in a unit cell of a battery to allow the compound including a thiol group to react with copper ions generated during battery operation or trap copper ions to cause reduction of the copper ions at the negative electrode surface to prevent dendrite formation.

Patent Literature 2 proposes using a nonaqueous electrolyte containing an isocyanate compound having at least one aromatic ring in the molecule to improve cycle characteristics of a secondary battery in which a negative electrode active material containing an atom of at least one selected from the group consisting of Si, Sn, and Pb.

[Citation List]

[Patent Literature]

[PLT 1]
Japanese Unexamined Patent Publication No. 2014-531720
[PLT 2]
Japanese Laid-open Patent Publication No. 2009-87934

[Summary of Invention]

[Technical Problem]

However, use of the method described in Patent Literature 1 is insufficient for suppressing the dissolution and deposition of metal contaminants. Further suppression of the dissolution and deposition of the metal contaminants is demanded.

[Solution to Problem]

An aspect of the present disclosure relates to a nonaqueous electrolyte for a nonaqueous electrolyte battery including a nonaqueous solvent, an electrolytic salt, and a thiophene compound having at least one electron-withdrawing group R including oxygen or nitrogen, wherein a content of the thiophene compound is 0.01 mass% or more and 10 mass% or less.

Another aspect of the present disclosure relates to a nonaqueous electrolyte battery including a positive electrode including a positive electrode active material, a separator, a negative electrode opposing the positive electrode with the separator interposed therebetween, and the above-described nonaqueous electrolyte.

[Advantageous Effects of Invention]

With the present disclosure, decrease in the voltage in nonaqueous electrolyte batteries due to dissolution and deposition reactions of metal can be suppressed.

While the novel features of the invention are set forth particularly in the appended claims, the invention, both as to organization and content, will be better understood and appreciated, along with other objects and features thereof, from the following detailed description taken in conjunction with the drawings.

[Brief Description of Drawing]

[FIG. 1] FIG. 1 is a partially cutaway oblique view of a nonaqueous electrolyte battery in an embodiment of the present disclosure.

[Description of Embodiments]

In the following, examples are illustrated for embodiments of the present disclosure, but the present disclosure is not limited to the examples illustrated below. In the following description, specific numerical values and materials may be exemplified, but other numerical values and other materials may be used as long as the effect of the present disclosure is obtained. In this specification, the phrase "numeral value A to numeral value B" means to include the numeral value A and numeral value B, and can be read as "the numeral value A or more and the numeral value B or less". In the description below, when a lower limit and an upper limit of numeral values relating to specific physical properties and conditions are exemplified, any of the exemplified lower limits and any of the exemplified upper limits can be paired arbitrarily unless the lower limit equals the upper limit or more. When a plurality of materials are given as examples, one of them can be selected and used singly, or two or more can be used in combination.

The present disclosure includes a combination of two or more of the items described in claims arbitrarily selected from the plurality of claims in the appended Claims. That is, as long as there is no technical contradiction, two or more items described in claims arbitrarily selected from the plurality of claims in the appended Claims can be combined.

The nonaqueous electrolyte for a nonaqueous electrolyte battery of the present disclosure includes a nonaqueous solvent, an electrolytic salt, and a thiophene compound having at least one electron-withdrawing group R including oxygen or nitrogen. A content of the thiophene compound relative to the nonaqueous electrolyte as a whole is 0.01 mass% or more and 10 mass% or less.

A nonaqueous electrolyte battery of the present disclosure includes a positive electrode including a positive electrode active material, a separator, a negative electrode opposing the positive electrode with the separator interposed therebetween, and the above-described nonaqueous electrolyte.

When metal is exposed to a positive electrode potential, metal ions may elute from the metal into the nonaqueous electrolyte. Metal ions may elute also from the positive electrode active material. For example, the positive electrode of a nonaqueous electrolyte battery includes a positive electrode active material, and the positive electrode active material has a high potential, and includes a metal component (in many cases, transition metal). The metal ions eluted into the nonaqueous electrolyte move from the positive electrode side to the negative electrode side, and deposit at the negative electrode side. As such dissolution and deposition reactions progress, the voltage of the nonaqueous electrolyte battery decreases. In nonaqueous electrolyte batteries, it is important to suppress dissolution and deposition of metal.

With the present disclosure, by adding a thiophene compound to the nonaqueous electrolyte, dissolution and deposition reactions of metal are significantly suppressed, and decrease in the voltage of the battery is suppressed.

The thiophene compound traps metal ions in the nonaqueous electrolyte at its thiophene ring structure portion, and suppresses reduction and deposition reactions of metal ions in the negative electrode. In addition, it is considered that the electron-withdrawing group R included in the thiophene compound has effects of improving entrapment of metal ions by the thiophene ring, and furthermore, the electron-withdrawing group R itself also works to trap metal ions in the nonaqueous electrolyte, and suppress reduction and deposition reactions of metal ions in the negative electrode. By the improvement of entrapment of metal ions by the thiophene compound, or by including a plurality of different functional groups capable of trapping metal ions in the thiophene compound, many metal ions are trapped effectively, and reduction and deposition of the metal ions are significantly suppressed.

Also, generally, metal ions may be present with a plurality of different ion valencies in the nonaqueous electrolyte. For example, copper ions can be present in the nonaqueous electrolyte with two different valencies of $Cu^+$ and $Cu^{2+}$, each having different electron acceptance. When there is only one kind of functional group that can form a coordinate bond with metal ions, there may be a case where, out of the metal ions with different ion valencies, a coordinate bond can be easily formed with one ion (e.g., monovalent copper ion), but it is difficult to form a coordinate bond with the other ion (e.g., divalent copper ion), making it difficult to trap all the metal ions that generate in the battery. In contrast, a compound having two or more different functional groups that can easily form a coordinate bond in accordance with the valency of the metal ion can achieve highly efficient trapping of metal ions.

The electron-withdrawing group R included in the thiophene compound may be capable of forming a coordinate bond with metal ions. The electron-withdrawing group R includes oxygen or nitrogen. The electron-withdrawing group R may include both oxygen and nitrogen. Examples of the electron-withdrawing group R include at least one selected from the group consisting of a carbonyl group, a nitrile group, and an isocyanate group. The carbonyl group may form an aldehyde group in which one end of the carbonyl group is bonded to a hydrogen atom, a carboxy group in which one end of the carbonyl group is bonded to a hydroxyl group, or may be a ketone group. The carboxy group may form an anion or a salt. The carbonyl group, the nitrile group, and the isocyanate group may be bonded to the thiophene ring.

That is, the electron-withdrawing group R may be directly bonded to the thiophene ring. The carbonyl group may be an ester carbonyl group.

The thiophene compound may further have an alkyl group (a methyl group, an ethyl group, a cyclopropyl group, etc.) bonded to the thiophene ring, or an alkenyl group.

Specific examples of the thiophene compound are shown below. However, the thiophene compound is not limited to these examples shown below. The thiophene compound may be used singly, or may be used in combination of two or more. The thiophene ring of the thiophene compound may be hydrogenated.

Examples of the thiophene compound having a carbonyl group include 5-methylthiophene-2-carbaldehyde, 3,5-dimethylthiophene-2-carbaldehyde, 5-cyclopropyl thiophene-2-carbaldehyde, and 2-((trimethylsilyl)methyl) tetrahydrothiophene-2-carbaldehyde.

Examples of the thiophene compound having a nitrile group include 5-ethinylthiophene-2-carbonitrile, 2-(5-methylthiophen-2-yl) propane nitrile, and 4-(2-(5-hexylthiophen-2-yl) vinyl)-1,3,5-triazine-2-carbonitrile.

Examples of the thiophene compound having an isocyanate group include 2-isocyanato-5-methylthiophene, and 2-isocyanato-5-(trifluoromethyl) thiophene.

Of these examples of the thiophene compound, in particular, in view of high compatibility with nonaqueous solvents, 5-methylthiophene-2-carbaldehyde can be preferably used. A structural formula of 5-methylthiophene-2-carbaldehyde is shown below.

[Chem.1]

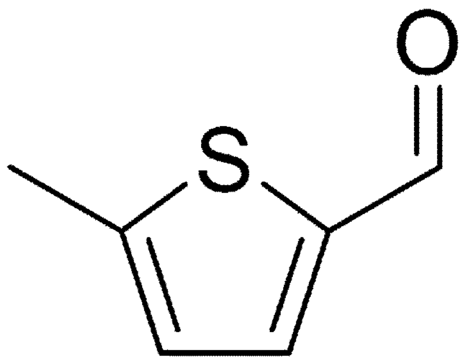

In the following, a nonaqueous electrolyte battery of the present disclosure is described in detail for each element. A nonaqueous electrolyte battery includes, for example, a positive electrode, a negative electrode, a nonaqueous electrolyte, and a separator such as below.

[Nonaqueous Electrolyte]

The nonaqueous electrolyte includes a nonaqueous solvent, an electrolytic salt, and a thiophene compound. The thiophene compound has the above-described electron-withdrawing group R.

With a content of the thiophene compound relative to the nonaqueous electrolyte as a whole of 0.01 mass% or more and 10 mass% or less, the effects of suppressing reduction and deposition of metal ions can be sufficiently achieved. In view of achieving effects of suppressing reduction and deposition of metal ions highly significantly, the content of the thiophene compound relative to the nonaqueous electrolyte as a whole preferably is 0.1 mass% or more and 5 mass% or less.

The content of the thiophene compound in the nonaqueous electrolyte can be determined, for example, by using gas chromatography with the conditions below.

Device used: GC-2010 Plus manufactured by SHIMADZU CORPORATION
Column: HP-1 (film thickness 1 μm, internal diameter 0.32 mm, length 60 m) manufactured by J & W
Column temperature: from 50 °C, increased to 90 °C with a temperature rising speed of 5 °C/min, kept at 90 °C for 15 minutes, then from 90 °C, increased to 250 °C with a temperature rising speed of 10 °C/min, and kept at 250 °C for 15 minutes
Split ratio: 1/50
Linear velocity: 30.0 cm/sec

Injection port temperature: 270 °C
Injection amount: 1 μL
Detector: FID 290 °C (sens.$10^1$)

(Nonaqueous solvent)

Examples of the nonaqueous solvent include cyclic carbonate, chain carbonate, cyclic carboxylate, and chain carboxylate. Examples of the cyclic carbonate include propylene carbonate (PC) and ethylene carbonate (EC). Examples of the chain carbonate include diethyl carbonate (DEC), ethyl methyl carbonate (EMC), and dimethyl carbonate (DMC). Examples of the cyclic carboxylate include γ-butyrolactone (GBL) and γ-valerolactone (GVL). Examples of the chain carboxylate include methyl formate, ethyl formate, propyl formate, methyl acetate (MA), ethyl acetate, propyl acetate, methyl propionate, ethyl propionate, and propyl propionate. The nonaqueous electrolyte may include one kind of the nonaqueous solvent, or two or more kinds may be used in combination.

(Electrolytic salt)

For the electrolytic salt, lithium salts are suitable. Examples of the lithium salt include $LiClO_4$, $LiBF_4$, $LiPF_6$, $LiAlCl_4$, $LiSbF_6$, LiSCN, $LiCF_3SO_3$, $LiCF_3CO_2$, $LiAsF_6$, $LiB_{10}Cl_{10}$, lithium lower aliphatic carboxylate, LiCl, LiBr, LiI, borate, and imide salts. Examples of the borate include lithium difluoro oxalateborate and lithium bis oxalateborate. Examples of the imide salt include lithium bisfluorosulfonyl imide ($LiN(FSO_2)_2$), and lithium bis(trifluoromethanesulfonyl) imide($LiN(CF_3SO_2)_2$). The nonaqueous electrolyte may have an electrolytic salt singly, or two or more of them may be used in combination.

The electrolytic salt concentration of the nonaqueous electrolyte is, for example, 0.5 mol/L or more and 2 mol/L or less.

The nonaqueous electrolyte may include other additives. Examples of the other additive include at least one selected from the group consisting of vinylene carbonate, fluoroethylene carbonate, and vinyl ethylene carbonate.

The nonaqueous electrolyte may include, as an additive for suppressing dissolution and deposition reactions of metal ions, an isocyanate compound having an isocyanate group and/or a nitrile compound having two or more nitrile groups. The isocyanate compound is reduced and decomposed at the negative electrode, and works to form a film on the surface of the negative electrode active material (e.g., carbon material such as graphite), suppressing reduction and decomposition of the nonaqueous electrolyte. In this manner, reduction and deposition reactions of metal ions can be suppressed. Meanwhile, the nitrile compound is oxidized at the positive electrode, and works to form a film on the positive electrode active material. In this manner, dissolving of metal ions composing the positive electrode active material into the nonaqueous electrolyte can be suppressed. However, in view of suppressing dissolution and deposition reactions of metal ions, the thiophene compound of the present disclosure is significantly excellent compared with the isocyanate compound and the nitrile compound.

[Positive Electrode]

The positive electrode includes a positive electrode active material. The positive electrode generally includes a positive electrode current collector, a layered positive electrode mixture (hereinafter, referred to as "positive electrode mixture layer") supported on the positive electrode current collector. The positive electrode mixture layer can be formed by applying a positive electrode slurry in which the elements of the positive electrode mixture are dispersed in a dispersion medium on a surface of the positive electrode current collector, and drying the slurry. The dried film may be rolled, if necessary. The positive electrode mixture may include, as an essential component, a positive electrode active material, and as optional components, a binder, a thickener, and the like.

(Positive electrode active material)

The positive electrode active material may be a material that can be used as a positive electrode active material of nonaqueous electrolyte batteries (particularly lithium ion secondary batteries), but it is not limited thereto. A preferable positive electrode active material is, for example, a lithium transition metal composite oxide having a layered rock salt type structure, and including Ni and at least one selected from the group consisting of Co, Mn, and Al.

In view of achieving a high capacity, the ratio of Ni in the metal elements other than Li included in the lithium transition metal composite oxide is preferably 80 atom % or more. The Ni ratio in the metal elements other than Li may be 85 atom % or more, or 90 atom % or more. The Ni ratio in the metal elements other than Li is, for example, preferably 95 atom % or less. When the range is to be limited, these upper and lower limits can be combined in any combinations.

In the following, a lithium transition metal composite oxide having a layered rock salt type structure, including

Ni and at least one selected from the group consisting of Co, Mn, and Al, and having a Ni ratio relative to metal elements other than Li of 80 atom% or more is also referred to as a "composite oxide HN". Li ions can be reversibly inserted to and desorbed from interlayers of the layered rock salt type structure of the composite oxide HN. With a higher Ni ratio, many lithium ions can be drawn from the composite oxide HN during charging, and the capacity can be increased.

Co, Mn, and Al contribute to stabilization of the crystal structure of the composite oxide HN with a high Ni content. However, in view of reduction in production costs, the Co content is preferably low. The composite oxide HN with a low Co content or not containing Co may contain Mn and Al.

The ratio of Co in the metal elements other than Li is preferably 10 atom% or less, more preferably 5 atom% or less, or Co does not have to be contained. In view of stabilization of the crystal structure of the composite oxide HN, 1 atom % or more, or 1.5 atom % or more of Co is preferably contained.

The ratio of Mn in the metal elements other than Li may be 10 atom % or less, or 5 atom % or less. The ratio of Mn in the metal elements other than Li may be 1 atom % or more, 3 atom % or more, or 5 atom % or more. When the range is to be limited, these upper and lower limits can be combined in any combinations.

The ratio of Al in the metal elements other than Li may be 10 atom % or less, or 5 atom % or less. The ratio of Al in the metal elements other than Li may be 1 atom % or more, 3 atom % or more, or 5 atom % or more. When the range is to be limited, these upper and lower limits can be combined in any combinations.

The composite oxide HN is represented by, for example, a formula: $Li_{\alpha}Ni_{(1-x1-x2-y-z)}Co_{x1}Mn_{x2}Al_{y}M_{z}O_{2+\beta}$. The element M is an element other than Li, Ni, Co, Mn, Al, and oxygen.

In the above-described formula, $\alpha$ representing the atomic ratio of lithium is, for example, $0.95 \leq \alpha \leq 1.05$. However, $\alpha$increases or decreases by charging and discharging. In $(2+\beta)$ representing the atomic ratio of oxygen, $\beta$ satisfies $-0.05 \leq \beta \leq 0.05$.

The coefficient 1-x1-x2-y-z (= v) representing the atomic ratio of Ni is 0.8 or more, or may be 0.85 or more, 0.90 or more, or 0.95 or more. The coefficient v representing the atomic ratio of Ni may be 0.98 or less, or 0.95 or less. When the range is to be limited, these upper and lower limits can be combined arbitrarily.

The coefficient x1 representing the atomic ratio of Co is, for example, 0.1 or less ($0 \leq x1 \leq 0.1$), may be 0.08 or less, 0.05 or less, or 0.01 or less. A case where x1 is 0 includes a case where a ratio of Co is under a detection limit.

The coefficient x2 representing the atomic ratio of Mn is, for example, 0.1 or less ($0 \leq x2 \leq 0.1$), may be 0.08 or less, 0.05 or less, or 0.03 or less. The coefficient x2 may be 0.01 or more, or 0.03 or more. Mn contributes to stabilization of the crystal structure of the composite oxide HN, and by including low cost Mn in the composite oxide HN, it is advantageous in reduction of costs. When the range is to be limited, these upper and lower limits can be combined in any combinations.

The coefficient y representing the atomic ratio of Al is, for example, 0.1 or less ($0 \leq y \leq 0.1$), may be 0.08 or less, 0.05 or less, or 0.03 or less. The coefficient y may be 0.01 or more, or 0.03 or more. Al contributes to stabilization of the crystal structure of the composite oxide HN. When the range is to be limited, these upper and lower limits can be combined in any combinations.

The coefficient z representing the atomic ratio of the element M is, for example, $0 \leq z \leq 0.10$, may be $0 < z \leq 0.05$, or $0.001 \leq z \leq 0.01$. When the range is to be limited, these upper and lower limits can be combined in any combinations.

The element M may be at least one selected from the group consisting of Ti, Zr, Nb, Mo, W, Fe, Zn, B, Si, Mg, Ca, Sr, Sc, and Y. In particular, when at least one selected from the group consisting of Nb, Sr, and Ca is contained in the composite oxide HN, it is assumed that the surface structure of the composite oxide HN stabilizes and the resistance decreases, and elution of metal is further suppressed. The element M present locally near the surface of the composite oxide HN particles is more effective.

The amount of elements contained in the composite oxide HN can be measured by, for example, an inductively coupled plasma atomic emission spectroscopy (ICP-AES), an electron probe micro analyzer (EPMA), or energy-dispersive X-ray spectroscopy (EDX).

The composite oxide HN is, for example, secondary particles of coagulated plurality of primary particles. The primary particles have a particle size of, for example, 0.05 μm or more and 1 μm or less. The secondary particles of the composite oxide HN have an average particle size of, for example, 3 μm or more and 30 μm or less, or may be 5 μm or more and 25 μm or less.

In this specification, the average particle size of the secondary particles means a particle size (volume average particle size) at which cumulative volume is 50% in the particle size distribution measured by the laser diffraction scattering method. Such a particle size may be referred to as D50. For example, "LA-750" manufactured by Horiba Corporation can be used as the measuring device.

The positive electrode active material may contain a lithium transition metal composite oxide other than the composite oxide HN, but preferably, the ratio of the composite oxide HN is high. The ratio of the composite oxide HN in the positive electrode active material is, for example, 90 mass% or more, may be 95 mass% or more, or 100%.

(Others)

For the binder, for example, a resin material is used. Examples of the binder include fluorine resin, polyolefin resin, polyamide resin, polyimide resin, acrylic resin, vinyl resin, and rubber materials (e.g., styrene-butadiene copolymer (SBR)). The binder may be used singly, or two or more kinds thereof may be used in combination.

Examples of the thickener include cellulose derivatives such as cellulose ether. Examples of the cellulose derivative include carboxymethyl cellulose (CMC) and a modified product thereof, and methylcellulose. The thickener may be used singly, or two or more kinds thereof may be used in combination.

Examples of the conductive agent include carbon nanotube (CNT), carbon fiber other than CNT, and conductive particles (e.g., carbon black, graphite).

The dispersion medium used for the positive electrode slurry is not particularly limited, and examples thereof include water, alcohol, N-methyl-2-pyrrolidone (NMP), and a solvent mixture thereof.

For the positive electrode current collector, for example, metal foil may be used. The positive electrode current collector may be porous. Examples of the porous current collector include a net, a punched sheet, and expanded metal. Examples of the material of the positive electrode current collector may be stainless steel, aluminum, an aluminum alloy, and titanium. The positive electrode current collector has a thickness of, for example, 1 to 50 μm, or the thickness may be 5 to 30 μm, although not limited thereto.

[Negative Electrode]

The negative electrode includes a negative electrode active material. The negative electrode generally includes a negative electrode current collector, a layered negative electrode mixture (hereinafter, referred to as negative electrode mixture layer) supported on the negative electrode current collector. The negative electrode mixture layer can be formed by applying a negative electrode slurry in which the elements of the negative electrode mixture are dispersed in a dispersion medium on a surface of the negative electrode current collector, and drying the slurry. The dried film may be rolled, if necessary.

The negative electrode mixture may include, as an essential component, a negative electrode active material, and as optional components, a binder, a thickener, a conductive agent, and the like.

(Negative electrode active material)

For the negative electrode active material, a metal lithium, or a lithium alloy may be used, but a material that is capable of electrochemically absorbing and releasing lithium ions is suitably used. Examples of such a material include a carbon material and a Si-containing material. The negative electrode may include one kind of negative electrode active material, or two or more kinds can be used in combination.

Examples of the carbon material include graphite, graphitizable carbon (soft carbon), and non-graphitizable carbon (hard carbon). The carbon material may be used singly, or two or more kinds thereof may be used in combination. The carbon material is preferably graphite, because it has excellent charge and discharge stability, and has a small irreversible capacity. Graphite includes, for example, natural graphite, artificial graphite, graphitized mesophase carbon particles, and the like.

Examples of the Si-containing material include Si simple substance, a silicon alloy, a silicon compound (silicon oxide, etc.), and a composite material in which a silicon phase is dispersed in a lithium ion conductive phase (matrix). Examples of the silicon oxide include $SiO_x$ particles. The coefficient x is, for example, $0.5 \leq x < 2$, or may be $0.8 \leq x \leq 1.6$. Examples of the lithium ion conductive phase include at least one selected from the group consisting of a $SiO_2$ phase, a silicate phase, and a carbon phase.

For the binder, the thickener, and the conductive agent, and the dispersion medium used for the negative electrode slurry, for example, those materials exemplified for the positive electrode can be used.

For the negative electrode current collector, for example, metal foil may be used. The negative electrode current collector may be porous. As the material of the negative electrode current collector, stainless steel, nickel, a nickel alloy, copper, a copper alloy, and the like can be exemplified. The negative electrode current collector has a thickness of, for example, 1 to 50 μm, or the thickness may be 5 to 30 μm, although not limited thereto.

[Separator]

It is desirable to interpose a separator between the positive electrode and the negative electrode. The separator is excellent in ion permeability and has suitable mechanical strength and electrically insulating properties. For the separator, a microporous thin film, a woven fabric, and a nonwoven fabric can be used. For the material of the separator, a polyolefin such as polypropylene or polyethylene is preferred.

In an example structure of the nonaqueous electrolyte battery, a positive electrode and a negative electrode are wound with a separator interposed therebetween to form an electrode group, and the electrode group is accommodated in an outer case along with a nonaqueous electrolyte. However, the structure is not limited thereto, and other forms of electrode groups may be used. For example, it can be a layered electrode group, in which a positive electrode and a negative electrode are layered with a separator interposed therebetween. The nonaqueous electrolyte secondary batteries may be of any form, for example, a cylindrical type, a prismatic type, a coin type, a button type, a laminated type, etc.

The nonaqueous electrolyte battery may be primary batteries, or secondary batteries.

In the following, a structure of a prismatic nonaqueous electrolyte secondary battery as an example of the nonaqueous electrolyte battery of the present disclosure is described with reference to FIG. 1.

The battery includes a bottomed prismatic battery case 4, and an electrode group 1 and a nonaqueous electrolytic solution (not shown) housed within the battery case 4. The electrode group 1 has a negative electrode in the form of a long strip, a positive electrode in the form of a long strip, and a separator interposed therebetween. The negative electrode current collector of the negative electrode is electrically connected to a negative electrode terminal 6 provided in a sealing plate 5 through a negative electrode lead 3. A negative electrode terminal 6 is insulated from the sealing plate 5 with a resin-made gasket 7. A positive electrode current collector of the positive electrode is electrically connected to a rear face of the sealing plate 5 through a positive electrode lead 2. That is, the positive electrode is electrically connected to the battery case 4 also serving as a positive electrode terminal. The periphery of the sealing plate 5 is fitted to the open end of the battery case 4, and the fitting portion is laser welded. The sealing plate 5 has an injection port for a nonaqueous electrolyte, and is sealed with a sealing plug 8 after injection.

The present disclosure will be described in detail below with reference to Examples and Comparative Examples. The present disclosure, however, is not limited to the following Examples.

<Examples 1 to 5>

A nonaqueous electrolyte secondary battery was made and evaluated in accordance with the following procedures.

(1) Production of positive electrode

By mixing 100 parts by mass of positive electrode active material particles ($LiNi_{0.88}Co_{0.09}Al_{0.03}O_2$), 1 part by mass of carbon nanotube, 1 part by mass of polyvinylidene fluoride, and a suitable amount of NMP, a positive electrode slurry was produced. Then, the positive electrode slurry was applied on one surface of an aluminum foil, the film was dried, and then rolled to form a positive electrode mixture layer (thickness 95 μm, density 3.6 g/$cm^3$) on both surfaces of the aluminum foil, thereby producing a positive electrode.

(2) Production of negative electrode

By mixing 98 parts by mass of the negative electrode active material (graphite), 1 part by mass of sodium salt (CMC-Na) of carboxymethyl cellulose, 1 part by mass of SBR, and a suitable amount of water, a negative electrode slurry was produced. Then, the negative electrode slurry was applied on one surface a copper foil as a negative electrode current collector, the film was dried, and rolled to form a negative electrode mixture layer on both surfaces of the copper foil.

(3) Production of nonaqueous electrolyte (liquid electrolyte)

To a solvent mixture of EC and EMC (EC: EMC = 3: 7(volume ratio)), $LiPF_6$, and 5-methylthiophene-2-carbaldehyde as the thiophene compound were dissolved, thereby producing a liquid electrolyte. The liquid electrolyte had a $LiPF_6$ concentration of 1.0 mol/L. The content of the thiophene compound was set to the mass% as shown in Table 1 relative to the total amount of the liquid electrolyte.

(4) Production of nonaqueous electrolyte secondary battery

The positive electrode was cut into a predetermined shape to obtain a positive electrode for evaluation. The positive electrode had a region of 20 mm × 20 mm that works as the positive electrode, and a connection region of 5 mm × 5 mm for connection with a tab lead. Thereafter, the positive electrode mixture layer formed on the above-described connection region was scraped to expose the positive electrode current collector. Near the center of the positive electrode mixture layer, metal copper balls with a diameter of about 100 μm were embedded intentionally. Afterwards, the exposed portion of the positive electrode current collector was connected to the positive electrode tab lead and a predetermined

region of the outer periphery of the positive electrode tab lead was covered with an insulating tab film.

The negative electrode was cut into the same form as the positive electrode, to obtain a negative electrode for evaluation. The negative electrode mixture layer formed on the connection region similarly to the positive electrode was peeled off to expose the negative electrode current collector. Afterwards, the exposed portion of the negative electrode current collector was connected to the negative electrode tab lead in the same manner as the positive electrode, and a predetermined region of the outer periphery of the negative electrode tab lead was covered with an insulating tab film.

A cell was produced using the positive electrode and negative electrode for evaluation. First, the positive electrode and the negative electrode were allowed to oppose each other with a polyethylene-made separator (thickness 12 μm) interposed therebetween so that the positive electrode mixture layer and the negative electrode mixture layer overlapped with each other, thereby producing an electrode plate group. Next, an Al laminate film (thickness 100 μm) cut into a 60 × 90 mm rectangle was folded to half, and the 60 mm long side end portion was heat-sealed to make an envelope of 60 × 45 mm. Afterwards, the produced electrode plate group was put into the envelope, and the end face of the Al laminate film was aligned with the position of the thermal welding resin of respective tab leads and sealed. Next, the nonaqueous electrolyte was injected from the non-heat healed short side of the Al laminate film, to impregnate each of the mixture layers with the nonaqueous electrolyte. Lastly, the end face of the injected side of the Al laminate film was sealed, thereby producing evaluation cells A1 to A5 of Examples 1 to 5.

(5) Evaluation

The evaluation cell was sandwiched by a clamp with a pair of 80 × 80 cm stainless steel (thickness 2 mm) plates and fixed under a pressure of 0.2 MPa.

Also, a reference cell was produced. The reference cell had the same configuration with the evaluation cells A1 to A5: in the positive electrode, metal copper balls were not embedded, and the thiophene compound was not added to the nonaqueous electrolyte. The reference cell was charged under an environment of a temperature of 25 °C at a constant current of 0.05 C until the battery voltage reached 4.2 V. Afterwards, the reference cell was discharged at a constant current of 0.05 C until the battery voltage reached 2.5 V, and a charge and discharge curve was obtained. The batteries were allowed to stand with an open circuit for 20 minutes between the charging and discharging.

The each of the evaluation cell was subjected to constant current charging under an environment of a temperature of 25 °C at a current of 0.3 C until the voltage reached 3.58 V, and thereafter, subjected to constant voltage charging at a constant voltage of 3.58 V until the electric current reached 0.02 C. Then, the evaluation cell was stored under an environment of a temperature of 25 °C, and the battery voltage $V_1$ after 48 hours passed, and the battery voltage $V_2$ after 72 hours passed were measured.

From the battery voltages $V_1$ and $V_2$, the state of charge $SOC_1$ after 48 hours passed and the state of charge $SOC_2$ after 72 hours passed were determined based on the charge and discharge curve. Based on the formula below, self-discharge rate sd per day was determined and evaluated.

$$\text{Self-discharge rate sd } (\%/\text{day}) = SOC_1(\%) - SOC_2(\%)$$

<<Comparative Example 1»

In the preparation of the nonaqueous electrolyte, 5-methylthiophene-2-carbaldehyde was not added.

Except for the above, a nonaqueous electrolyte secondary battery was produced in the same manner as in Examples 1 to 5, thereby producing an evaluation cell B1 of Comparative Example 1. The self-discharge rate sd was determined in the same manner as in Examples 1 to 5, and evaluation was performed.

<<Comparative Example 2»

In the preparation of the nonaqueous electrolyte, 2,4-difluoro-1-isocyanato benzene was added as the isocyanate compound instead of 5-methylthiophene-2-carbaldehyde, thereby preparing a liquid electrolyte. The content of 2,4-difluoro-1-isocyanato benzene relative to the total amount of the liquid electrolyte was set to 1 mass%. The structural formula of 2,4-difluoro-1-isocyanato benzene is shown below.

[Chem.2]

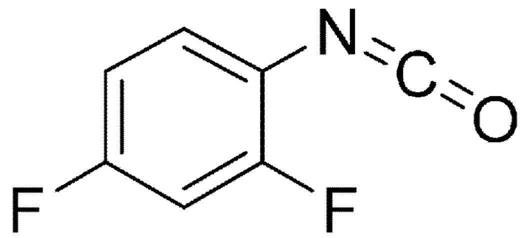

Except for the above, a nonaqueous electrolyte secondary battery was produced in the same manner as in Examples 1 to 5, thereby producing an evaluation cell B2 of Comparative Example 2. The self-discharge rate sd was determined in the same manner as in Examples 1 to 5, and evaluation was performed.

Table 1 shows evaluation results for the self-discharge rate sd of the evaluation cells A1 to A5, B 1, and B2. Table 1 also shows the kinds of additives having effects of suppressing dissolution and deposition of metal ions in each of the cells, and the contents thereof.

Table 1]

| Cell | Additive | | Self-discharge rate sd (%) |
|---|---|---|---|
| | Kind | Content (mass%) | |
| A1 | 5-methylthiophene-2-carbaldehyde | 0.01 | 3.7 |
| A2 | 5-methylthiophene-2-carbaldehyde | 0.1 | 2.4 |
| A3 | 5-methylthiophene-2-carbaldehyde | 1 | 2.0 |
| A4 | 5-methylthiophene-2-carbaldehyde | 5 | 2.1 |
| A5 | 5-methylthiophene-2-carbaldehyde | 10 | 3.5 |
| B1 | Not used | - | 6.9 |
| B2 | 2,4-difluoro-1-isocyanato benzene | 1 | 5.8 |

Based on Table 1, comparison of the cell B1 with the cell B2 shows that in the cell B2, by adding the isocyanate compound, the self-discharge rate sd decreased compared with the cell B1, showing some effects of suppressing deposition of metal ions. However, the amount of the decreased self-discharge rate sd is small.

In contrast, in the cells A1 to A5, in which the thiophene compound was added in a range of 0.01 mass% to 10 mass%, compared with the cell B2, the self-discharge rate sd decreased, and deposition of metal ions was suppressed. In particular, in the cells A2 to A4, in which the thiophene compound was added in a range of 0.1 mass% to 5 mass%, the self-discharge rate sd significantly decreased.

[Industrial Applicability]

The nonaqueous electrolyte battery of the present disclosure is suitable for a main power source of mobile communication devices and mobile electronic devices, and for an on-vehicle power source, but applications are not limited thereto.

Although the present invention has been described in terms of the presently preferred embodiments, it is to be understood that such disclosure is not to be interpreted as limiting. Various alterations and modifications will no doubt become apparent to those skilled in the art to which the present invention pertains, after having read the above disclosure. Accordingly, it is intended that the appended claims be interpreted as covering all alterations and modifications as fall within the true spirit and scope of the invention.

[Reference Signs List]

1: electrode group, 2: positive electrode lead, 3: negative electrode lead, 4: battery case, 5: sealing plate, 6: negative electrode terminal, 7: gasket, 8: sealing plug

## Claims

1. A nonaqueous electrolyte for a nonaqueous electrolyte battery comprising:

   a nonaqueous solvent,
   an electrolytic salt, and
   a thiophene compound having at least one electron-withdrawing group R including oxygen or nitrogen, wherein a content of the thiophene compound is 0.01 mass% or more and 10 mass% or less.

2. The nonaqueous electrolyte of claim 1, wherein the content of the thiophene compound is 0.1 mass% or more and 5 mass% or less.

3. The nonaqueous electrolyte of claim 1 or 2, wherein the electron-withdrawing group R is at least one selected from the group consisting of a carbonyl group, a nitrile group, and an isocyanate group.

4. The nonaqueous electrolyte of claim 3, wherein the thiophene compound includes at least one selected from the group consisting of 5-methylthiophene-2-carbaldehyde, 3,5-dimethylthiophene-2-carbaldehyde, 5-cyclopropyl thiophene-2-carbaldehyde, 2-((trimethylsilyl) methyl) tetrahydrothiophene-2-carbaldehyde, 5-ethinylthiophene-2-carbonitrile, 2-(5-methylthiophene-2-yl) propane nitrile, 4-(2-(5-hexylthiophene-2-yl) vinyl)-1,3,5-triazine-2-carbonitrile, 2-isocyanato-5-methylthiophene, and 2-isocyanato-5-(trifluoromethyl) thiophene.

5. The nonaqueous electrolyte of claim 4, wherein the thiophene compound includes at least 5-methylthiophene-2-carbaldehyde.

6. A nonaqueous electrolyte battery comprising:

   a positive electrode including a positive electrode active material,
   a separator,
   a negative electrode opposing the positive electrode with the separator interposed therebetween, and
   the nonaqueous electrolyte of any one of claims 1 to 5.

7. The nonaqueous electrolyte battery of claim 6, wherein the positive electrode active material includes a lithium transition metal composite oxide having a layered rock salt type structure and including Ni and at least one selected from the group consisting of Co, Mn, and Al, and
   a Ni ratio in metal elements other than Li included in the lithium transition metal composite oxide is 80 atom% or more.

FIG. 1

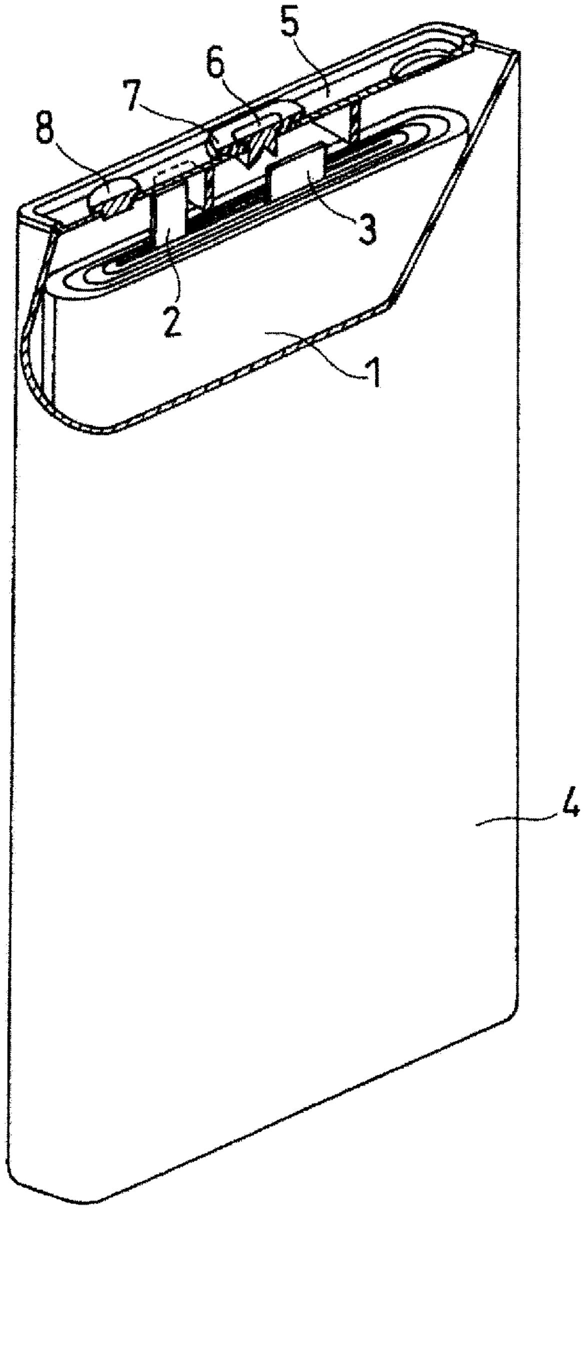

**INTERNATIONAL SEARCH REPORT**

International application No.
**PCT/JP2022/031988**

**A. CLASSIFICATION OF SUBJECT MATTER**

***H01M 10/0567***(2010.01)i; ***H01M 4/505***(2010.01)i; ***H01M 4/525***(2010.01)i; ***H01M 10/052***(2010.01)i
FI: H01M10/0567; H01M10/052; H01M4/525; H01M4/505

According to International Patent Classification (IPC) or to both national classification and IPC

**B. FIELDS SEARCHED**

Minimum documentation searched (classification system followed by classification symbols)

H01M10/0567; H01M4/505; H01M4/525; H01M10/052

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| X<br>Y | US 2020/0388881 A1 (ENEVATE CORPORATION) 10 December 2020 (2020-12-10) claims, examples, paragraphs [0061], [0069] | 1-6<br>7 |
| X<br>Y | JP 2019-91792 A (ASAHI KASEI CORP) 13 June 2019 (2019-06-13) claims, paragraphs [0143], [0218], example 35 | 1-3, 6-7<br>7 |
| X<br>Y | JP 2015-72769 A (TDK CORP) 16 April 2015 (2015-04-16) claims, examples, paragraph [0051], examples 1-1 to 5-3 | 1-3, 6-7<br>7 |
| X<br>Y | JP 2020-129440 A (SANYO CHEMICAL IND LTD) 27 August 2020 (2020-08-27) claims, example 4 | 1-3, 6<br>7 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **05 October 2022** | **18 October 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | <br><br>Telephone No. |

Form PCT/ISA/210 (second sheet) (January 2015)

**INTERNATIONAL SEARCH REPORT**

International application No. **PCT/JP2022/031988**

**C. DOCUMENTS CONSIDERED TO BE RELEVANT**

| Category* | Citation of document, with indication, where appropriate, of the relevant passages | Relevant to claim No. |
|---|---|---|
| X | JP 2018-41588 A (MURATA MANUFACTURING CO., LTD.) 15 March 2018 (2018-03-15) claims, examples, paragraph [0064] | 1-3, 6 |
| Y | | 7 |
| X | JP 2019-207854 A (HYUNDAI MOTOR COMPANY) 05 December 2019 (2019-12-05) claims, examples | 1-3, 6 |
| Y | | 7 |
| X | JP 2008-16252 A (SONY CORP) 24 January 2008 (2008-01-24) claims, examples 7, 19, 31, 43 | 1-3, 6 |
| Y | | 7 |
| X | JP 2001-266939 A (MITSUBISHI GAS CHEM CO INC) 28 September 2001 (2001-09-28) claims, examples | 1-3, 6 |
| Y | | 7 |
| X | JP 2015-149250 A (NEC CORP) 20 August 2015 (2015-08-20) claims, examples | 1-3, 6 |
| Y | | 7 |
| X | JP 2004-111393 A (HC STARCK GMBH) 08 April 2004 (2004-04-08) claims, examples | 1-3, 6 |
| Y | | 7 |
| X | JP 11-162512 A (NEC MOLI ENERGY CANADA LTD) 18 June 1999 (1999-06-18) claims, examples | 1-3, 6 |
| Y | | 7 |
| X | KR 10-2015-0075495 A (DONGWOO FINE-CHEM CO., LTD.) 06 July 2015 (2015-07-06) claims, examples | 1-3, 6 |
| Y | | 7 |
| X | CN 109473721 A (HEFEI GUOXUAN HIGH-TECH POWER ENERGY CO., LTD.) 15 March 2019 (2019-03-15) claims, examples, paragraph [0023] | 1-3, 6 |
| Y | | 7 |
| X | US 2014/0342242 A1 (SAMSUNG SDI CO., LTD.) 20 November 2014 (2014-11-20) claims, examples | 1-3, 6 |
| Y | | 7 |
| X | US 2021/0249689 A1 (ENEVATE CORPORATION) 12 August 2021 (2021-08-12) claims, examples, paragraphs [0047], [0056] | 1-3, 6 |
| Y | | 7 |

Form PCT/ISA/210 (second sheet) (January 2015)

**INTERNATIONAL SEARCH REPORT**
**Information on patent family members**

International application No.
**PCT/JP2022/031988**

| Patent document cited in search report | Publication date (day/month/year) | Patent family member(s) | Publication date (day/month/year) |
|---|---|---|---|
| US 2020/0388881 A1 | 10 December 2020 | (Family: none) | |
| JP 2019-91792 A | 13 June 2019 | (Family: none) | |
| JP 2015-72769 A | 16 April 2015 | (Family: none) | |
| JP 2020-129440 A | 27 August 2020 | (Family: none) | |
| JP 2018-41588 A | 15 March 2018 | US 2019/0207257 A1<br>claims, examples, paragraph [0069]<br>WO 2018/047499 A1<br>CN 109661744 A | |
| JP 2019-207854 A | 05 December 2019 | US 2019/0372162 A1<br>claims, examples<br>EP 3576206 A1<br>KR 10-2019-0135776 A<br>CN 110544792 A | |
| JP 2008-16252 A | 24 January 2008 | (Family: none) | |
| JP 2001-266939 A | 28 September 2001 | (Family: none) | |
| JP 2015-149250 A | 20 August 2015 | (Family: none) | |
| JP 2004-111393 A | 08 April 2004 | US 2004/0053138 A1<br>claims, examples<br>DE 10340500 A<br>KR 10-2004-0024842 A<br>CN 1490892 A | |
| JP 11-162512 A | 18 June 1999 | US 6074777 A<br>claims, examples | |
| KR 10-2015-0075495 A | 06 July 2015 | (Family: none) | |
| CN 109473721 A | 15 March 2019 | (Family: none) | |
| US 2014/0342242 A1 | 20 November 2014 | KR 10-2014-0135038 A | |
| US 2021/0249689 A1 | 12 August 2021 | WO 2021/158366 A1 | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2014531720 A
- JP 2009087934 A